(19) **Europäisches Patentamt / European Patent Office / Office européen des brevets**

(11) **EP 3 133 392 B1**

(12) **FASCICULE DE BREVET EUROPEEN**

(45) Date de publication et mention de la délivrance du brevet:
**06.06.2018 Bulletin 2018/23**

(51) Int Cl.:
**G01N 30/86** *(2006.01)* G01N 30/60 *(2006.01)*

(21) Numéro de dépôt: **16184749.6**

(22) Date de dépôt: **18.08.2016**

(54) **PROCÉDÉ D' ESTIMATION D' UN TEMPS DE RÉTENTION DANS UNE COLONNE DE CHROMATOGRAPHIE**

VERFAHREN ZUR ABSCHÄTZUNG DER RETENTIONSZEIT IN EINER CHROMATOGRAFIESÄULE

METHOD FOR ESTIMATING A RETENTION TIME IN A CHROMATOGRAPHY COLUMN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.08.2015 FR 1557848**

(43) Date de publication de la demande:
**22.02.2017 Bulletin 2017/08**

(73) Titulaire: **Commissariat à l'énergie atomique et aux énergies alternatives
75015 Paris (FR)**

(72) Inventeurs:
• **HARANT, Olivier
  38120 SAINT-EGREVE (FR)**
• **BERTHOLON, François
  38700 LA TRONCHE (FR)**
• **GRANGEAT, Pierre
  38330 SAINT-ISMIER (FR)**

(74) Mandataire: **GIE Innovation Competence Group
310, avenue Berthelot
69372 Lyon Cedex 08 (FR)**

(56) Documents cités:
• M. WERNEKENSCHNIEDER ET AL: "Monte-carlo simulation of gas chromatographic separation for the prediction of retention times and peak half widths", CHROMATOGRAPHIA, vol. 28, no. 5-6, 1 septembre 1989 (1989-09-01), pages 241-248, XP055281855, DE ISSN: 0009-5893, DOI: 10.1007/BF02260768
• PHILLIPS J B ET AL: "Probabilistic Approach to Digital Simulation of Chromatographic Processes", SEPARATION SCIENCE AND TECHNOLOGY, DEKKER, NEW YORK, NY, US, vol. 16, 23 janvier 1981 (1981-01-23), pages 861-884, XP009190600, ISSN: 0149-6395
• FRANCESCO DONDI ET AL: "Monte Carlo Model of Nonlinear Chromatography", ANALYTICAL CHEMISTRY, vol. 72, no. 18, 1 septembre 2000 (2000-09-01), pages 4353-4362, XP055281862, ISSN: 0003-2700, DOI: 10.1021/ac0003347
• ATTILA FELINGER: "Molecular dynamic theories in chromatography", JOURNAL OF CHROMATOGRAPHY, vol. 1184, no. 1-2, 3 janvier 2008 (2008-01-03), pages 20-41, XP055281523, NL ISSN: 0021-9673, DOI: 10.1016/j.chroma.2007.12.058

**Description**

## DOMAINE TECHNIQUE

Le domaine technique de cette demande est l'analyse d'espèces chimiques ou biologiques par chromatographie, et plus particulièrement la modélisation d'un signal de chromatographie.

## ART ANTERIEUR

L'utilisation de la chromatographie est une technique très répandue pour l'analyse d'espèces chimiques en milieu liquide ou gazeux. Cette technique d'analyse est basée sur des colonnes de chromatographie, dont le fonctionnement est bien connu : une particule parcourt un canal, entre une entrée et une sortie, en étant portée par un fluide, dit fluide porteur, également désigné par le terme phase mobile. La paroi du canal comporte un revêtement, appelé phase stationnaire, avec lequel la particule présente une affinité, de telle sorte que la particule est apte à être momentanément adsorbée, puis désorbée. En fonction de l'affinité avec la phase stationnaire, le parcours de la particule à travers le canal peut être plus ou moins long. Une colonne de chromatographie comporte également un détecteur, placé à la sortie du canal, pour détecter la présence de la particule lorsque cette dernière sort du canal.

Généralement, le signal détecté par le détecteur prend la forme d'un histogramme représentant le nombre de détections en fonction du temps, cet histogramme étant désigné par le terme chromatogramme.

Lorsque différentes particules, de différentes espèces, sont injectées en même temps dans une colonne, le temps de parcours de chaque particule dépend de son affinité avec la phase stationnaire, dépendant de la nature chimique de la particule. Aussi, le chromatogramme présente différents pics, chaque pic représentant la distribution du temps de parcours de particules de la même espèce dans la colonne.

Le chromatogramme peut être modélisé, en fonction de chaque espèce de particule, et cela a été largement décrit dans la littérature. Cette modélisation correspond à l'établissement d'un modèle dit modèle direct, permettant d'estimer un chromatogramme connaissant la nature des particules introduites. Cela est par exemple décrit dans la demande de brevet WO201026228, cette dernière décrivant la modélisation d'un chromatogramme basé sur la prise en compte d'un modèle spatio-temporel.

Les publications Wernekenschnieder M. "Monte-Carlo simulation of gas chromatographic séparation for the prédiction of retention times and peak half widths", Philips JB "Probabilistic Approach to Digital Simulation of Chromatographic Processes" et Dondi F. "Monte Carlo Model of Nonlinear Chromatography" décrivent des procédés de modélisation d'une colonne de chromatographie basés sur une modélisation du comportement individuel de particules.

Le parcours de la particule à travers la colonne dépend de paramètres de fonctionnement de la colonne, ces paramètres ayant une influence sur l'adsorption ou la désorption de la particule. Il peut s'agir de la température de la colonne ou de la composition des phases mobile ou stationnaire. Afin d'obtenir une meilleure séparation entre particules d'espèces chimiques différentes, ces paramètres de fonctionnement peuvent être modulés. Par exemple, la température ou la composition de la phase mobile peuvent varier temporellement entre l'entrée et la sortie de la particule. Cela peut également concerner la phase stationnaire, dont la composition peut varier spatialement, si bien que durant le parcours de la particule, les propriétés d'adsorption et/ou de désorption évoluent temporellement. Du fait de cette modulation, qu'elle soit temporelle ou spatiale, les propriétés d'adsorption et de désorption de la phase stationnaire vis-à-vis de chaque type de particule sont modifiées.

Or, les modélisations réalisées dans les documents précédemment cités ne sont pas adaptées, ou ne décrivent pas une situation dans laquelle un paramètre de fonctionnement de la colonne évolue durant le parcours de la particule dans la colonne. La publication Wernekenschnieder M. "Monte-Carlo Simulation of Gas Chromatographic Séparation for the Prédiction of Rétention Times and Peak Half Widths" décrit une modélisation d'une colonne de chromatographie selon une approche de type Monte Carlo, en prenant en compte une évolution de la température de la colonne. Cependant, il n'est pas tenu compte de l'évolution de la température de la colonne lors de chaque adsorption, c'est-à-dire entre l'instant auquel une particule est adsorbée et l'instant auquel une particule est désorbée.

Les inventeurs ont déterminé un procédé de modélisation plus perfectionné, permettant d'établir un modèle direct pouvant s'appliquer à des colonnes de chromatographie dont un, voire plusieurs, paramètres de fonctionnement évolue durant le parcours d'une particule dans la colonne.

## EXPOSE DE L'INVENTION

Un objet de l'invention est un procédé d'estimation d'un temps de rétention d'une particule dans une colonne de chromatographie selon la revendication 1. Selon un mode de réalisation, durant le parcours de la particule à travers la colonne, un paramètre régissant le fonctionnement de la colonne varie, de telle sorte que la première loi ou la deuxième loi évolue en fonction dudit paramètre.

- Le paramètre peut alors être choisi parmi une température de la colonne,
- une composition de la phase mobile, en particulier en phase liquide,

auquel cas le paramètre évolue en fonction du temps durant le parcours de la particule, selon une pluralité de paliers.

Le temps passé dans la phase stationnaire, au cours de l'adsorption i, peut alors être obtenu en fonction d'au moins un des paramètres suivants :

- la durée de chaque palier entre l'instant d'adsorption, déterminé lors de l'étape i) et l'avant-dernière itération des sous-étapes ii) à v),
- l'estimation du temps passé dans la phase stationnaire, déterminé lors la dernière itération des sous-étapes ii) à v).

Ladite première loi de probabilité peut suivre une loi exponentielle, paramétrée par un taux d'adsorption, ce dernier représentant une probabilité par unité de temps que ladite particule, se trouvant dans la phase mobile, soit adsorbée dans la phase stationnaire.

Ladite loi de probabilité du temps passé dans la phase stationnaire suit une loi exponentielle, paramétrée par un taux de désorption, ce dernier représentant une probabilité par unité de temps que ladite particule, se trouvant dans la phase stationnaire, soit désorbée de ladite la phase stationnaire.

Ledit temps mort peut notamment correspondre au temps moyen passé par une particule, transportée par le fluide porteur, dans ladite colonne sans adsorption dans la phase stationnaire. Selon un mode de réalisation, les étapes a) à e) sont réalisées pour une pluralité de particules de mêmes espèces, de façon à obtenir une distribution d'un temps de rétention de ladite espèce dans la colonne.

Selon un mode de réalisation, les étapes a) à e) sont réalisées en considérant une pluralité de particules de différentes espèces de façon à obtenir une distribution d'un temps de rétention pour chacune de ces espèces.

Le procédé peut alors comprendre une étape f) de détermination d'un indicateur statistique d'au moins une distribution du temps de rétention d'une espèce, par exemple une moyenne, ou un moment.

Un autre objet de l'invention est un support d'enregistrement d'informations, comportant des instructions pour l'exécution d'un procédé tel que décrit dans cette demande, ces instructions étant aptes à être exécutées par un processeur.

L'invention repose sur une description du comportement individuel d'une molécule durant son passage à travers la colonne, selon une technique dite de sondage. Cette approche microscopique permet de tenir compte d'une évolution d'un paramètre régissant le fonctionnement de la colonne durant le parcours d'une molécule. En décrivant le comportement d'un ensemble de molécules de la même espèce, comportant un nombre de molécules considéré comme suffisamment représentatif, l'invention permet d'établir une distribution du temps de rétention correspondant à ladite espèce, à partir de laquelle on peut déterminer des indicateurs statistiques, en particulier la moyenne, la variance ou autres moments.

L'invention sera mieux comprise par la lecture des exemples de réalisation décrits ci-après, lesquels se basent sur les figures suivantes.

## FIGURES

La figure 1 représente une colonne de chromatographie.
La figure 2 représente les étapes d'un procédé selon un premier mode de réalisation de l'invention.
Les figures 3A et 3B présentent respectivement les étapes d'un procédé selon un deuxième et un troisième mode de réalisation de l'invention.
La figure 4A représente le résultat de simulations du parcours de 500 particules d'une même espèce. Elle représente l'évolution du temps cumulé passé, par chaque molécule, dans la phase mobile, entre chaque adsorption. La figure 4B représente la distribution du temps de rétention dans la colonne pour l'ensemble des parcours modélisés.
La figure 5 représente des estimations du temps de rétention ajusté moyen de différentes molécules, obtenues selon un procédé selon l'invention, confrontées à un chromatogramme expérimental d'un mélange comprenant lesdites molécules.

## EXPOSE DE MODES DE REALISATION PARTICULIERS

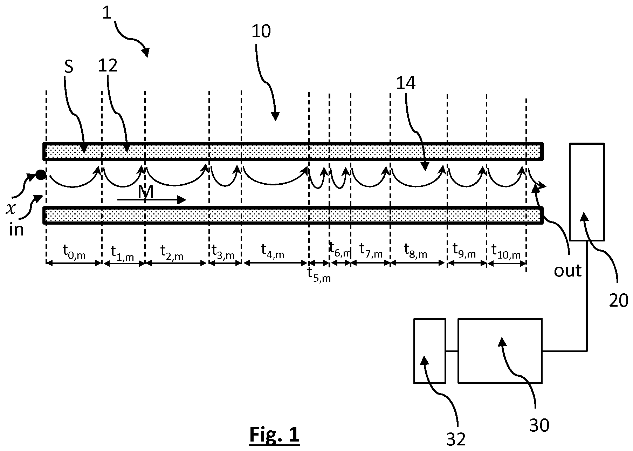

La figure 1 représente une colonne de chromatographie 1, comportant un canal 10 et un détecteur 20. La paroi du canal 10 comporte un revêtement 12, dit phase stationnaire S. Le canal comporte également une partie centrale 14 dans lequel un fluide porteur est apte à circuler entre une entrée in et une sortie out. Un tel fluide porteur est généralement désigné par le terme de phase mobile M.

Le fluide porteur peut être un gaz ou un liquide, dont l'affinité avec la phase stationnaire S est négligeable, si bien que le fluide porteur n'interagit pas avec la phase stationnaire durant son parcours dans la colonne. Son temps de parcours dans la colonne, c'est-à-dire entre l'entrée et la sortie de la colonne, est désigné par le terme temps mort, et noté $t_0$. Ce temps mort $t_0$ correspond au temps de parcours d'une particule n'interagissant pas avec la phase stationnaire.

La fonction du fluide porteur est de transporter une particule $x$ entre l'entrée et la sortie du canal. Durant son parcours dans la colonne, la particule $x$ interagit avec la phase stationnaire S, ce qui entraîne une pluralité d'adsorptions / désorptions. Entre chaque adsorption, la particule est portée par la phase mobile M, et évolue à la même vitesse que cette dernière. Sur la figure 1, le trajet de la particule $x$, dans la colonne 1, est représenté par une succession de flèches, chaque flèche montrant le parcours de la particule $x$ entre deux adsorptions successives. Les temps passés entre chaque adsorption sont également représentés. Ils sont désignés par $t_{0,m}$ (entre l'entrée et la première adsorption), $t_{1,m}$ (entre la première et la deuxième adsorption), $t_{2,m}$, $t_{3,m}$, $t_{4,m}$, $t_{5,m}$, $t_{6,m}$, $t_{7,m}$, $t_{8,m}$, $t_{9,m}$, $t_{10,m}$, . D'une façon générale, le temps $t_{i,m}$ désigne le temps passé dans la phase mobile par une particule $x$ suite à une $i^{\text{ème}}$ adsorption, $i$ étant un entier positif compris entre 0 et $N_i$, $N_i$ représentant un nombre d'adsorptions subies par la particule $x$ dans la colonne.

A la sortie du canal est placé un détecteur 20, apte à émettre un signal représentatif du nombre de particules sortant de la colonne en fonction du temps. Ce signal correspond au chromatogramme évoqué dans la description de l'art antérieur.

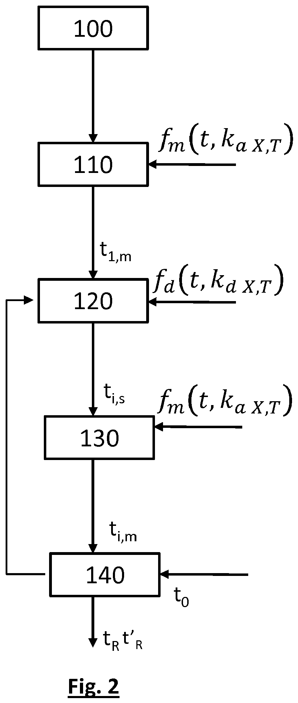

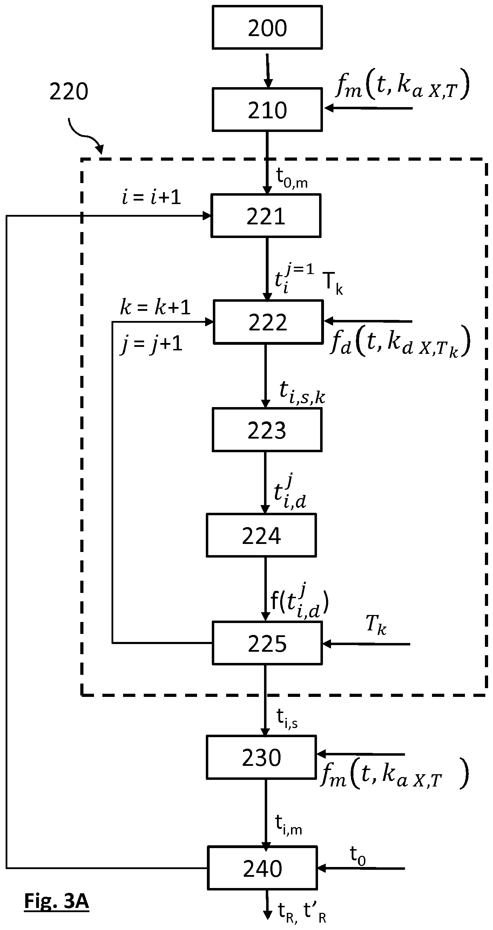

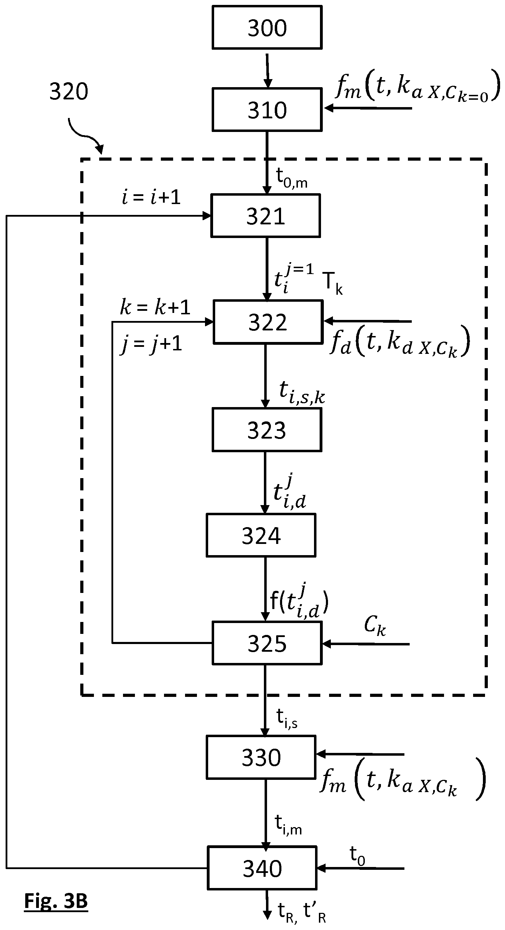

Le détecteur 20 est apte à être connecté à un processeur 30, ce dernier étant relié à une mémoire 32 comportant des instructions, ces dernières pouvant être exécutées par le processeur 30, pour mettre en oeuvre le procédé représenté sur les figures 2, 3A ou 3B, et décrit ci-après. Ces instructions peuvent être sauvegardées sur un support d'enregistrement, lisible par un processeur, de type disque dur, CDROM ou autre type de mémoire.

Les inventeurs ont choisi de modéliser le chromatogramme, c'est-à-dire de déterminer un modèle direct de la colonne, en suivant une approche originale, basée sur un modèle stochastique, en simulant le parcours individuel d'une particule, de façon séquentielle et aléatoire, en se basant sur des lois de probabilités décrivant le comportement de la particule dans la colonne. La simulation d'un grand nombre de particules $x$ d'une même espèce X permet alors d'obtenir une distribution statistique relative à leur temps de parcours dans la colonne, également appelé temps de rétention $t_R$ . Une telle distribution constitue le modèle direct de la colonne vis-à-vis de ladite espèce de particule.

Par particule, on entend une entité chimique ou biologique apte à être détectée par le détecteur. Il s'agit par exemple d'une molécule, d'une protéine, d'un peptide d'un agrégat moléculaire, d'un complexe moléculaire, d'une nanoparticule.

Par particule de même espèce, on entend une particule de même nature chimique, ou constituée par les mêmes éléments chimiques. Dans la suite de la description, l'indice $X$ désigne une espèce de particule, tandis que l'indice $x$ désigne une particule individuelle.

La modélisation est basée sur l'utilisation :

- d'une loi de probabilité du temps passé par la particule dans la phase mobile, avant ou après chaque adsorption dans la phase stationnaire, cette loi étant désignée par la suite par le terme première loi de probabilité.
- d'une loi de probabilité du temps passé par la particule dans la phase stationnaire, au cours de chaque adsorption, cette loi étant désignée par la suite par le terme deuxième loi de probabilité.

La première et la deuxième lois de probabilités dépendent de l'espèce $X$ de chaque particule et de paramètres P régissant le fonctionnement de la colonne de chromatographie.

D'une façon générale, le parcours d'une particule dans la colonne est décrit par des tirages aléatoires successifs, respectivement selon la première et la deuxième loi de probabilité, afin de déterminer des temps passés :

- entre chaque adsorption, dans la phase mobile,
- au cours de chaque adsorption, dans la phase stationnaire.

Comme précédemment évoqué en lien avec l'art antérieur, le fonctionnement de la colonne 1 est régi par des paramètres de fonctionnement P, dits paramètres, ces derniers ayant une influence sur l'adsorption et la désorption de la particule. De tels paramètres de fonctionnement sont par exemple :

- la température T de la colonne ;
- la composition de la phase mobile, en particulier dans le cas où il s'agit d'un liquide ;
- la composition de la phase stationnaire ;

Ces paramètres peuvent évoluer lorsque la particule traverse la colonne. La température et/ou la composition de la phase mobile peuvent être modulées temporellement, tandis que la composition de la phase stationnaire peut être modulée spatialement, entre l'entrée *in* et la sortie *out* de la colonne.

Dans les modes de réalisation décrits ci-dessous, la première et la deuxième loi de probabilité suivent des lois exponentielles, respectivement paramétrées par un taux d'adsorption $k_{a\,X,P}$ et un taux de désorption $k_{d\,X,P}$. Le taux d'adsorption $k_{a\,X,P}$ correspond à la probabilité par unité de temps qu'une particule *x* de l'espèce *X*, présente dans la phase mobile, soit adsorbée dans la phase stationnaire, en considérant des paramètres de fonctionnement *P*. Son inverse $\frac{1}{k_{a\,X,P}}$ correspond à une durée moyenne passée par la particule dans la phase mobile, entre deux adsorptions successives. Le taux de désorption $k_{d\,X,P}$ correspond à la probabilité par unité de temps qu'une particule *x* de l'espèce *X*, présente dans la phase stationnaire, soit désorbée, en considérant des paramètres de fonctionnement *P*. Son inverse $\frac{1}{k_{d\,X,P}}$ correspond à une durée moyenne passée par la particule dans la phase stationnaire, suite à une adsorption. Les taux d'adsorption et de désorption sont connus et peuvent être mémorisés dans la mémoire 32.

Ainsi, les première et deuxième lois de probabilité s'écrivent respectivement :

-

$$f_m\big(t, k_{a\,X,P}\big) = k_{a\,X,P} \times e^{-t \times k_{a\,X,P}} \quad (1)$$

-

$$f_d\big(t, k_{d\,X,P}\big) = k_{d\,X,P} \times e^{-t \times k_{d,X,P}} \quad (2)$$

On comprend que l'indice P désigne soit un, soit plusieurs paramètres de fonctionnement.

La figure 2 représente un premier mode de réalisation d'un procédé selon l'invention, dans lequel les paramètres de fonctionnement de la colonne sont constants durant le parcours d'une particule. La particule *x* est, dans cet exemple, une molécule gazeuse.

Etape 100 : initialisation. La molécule *x* est introduite dans la colonne.

Etape 110 : détermination du temps de parcours avant la première adsorption. Cette étape comprend un tirage aléatoire conditionné par la première loi de probabilité, de façon à établir un temps $t_{0,m}$ passé dans la phase mobile, avant une première adsorption.

Le procédé suit alors un processus itératif, l'indice i désignant le rang de l'itération.

Etape 120 : lors de chaque adsorption i, réalisation d'un tirage conditionné par la deuxième loi de probabilité, de façon à établir un temps $t_{i,s}$, passé par la molécule dans la phase stationnaire au cours de ladite adsorption.

Etape 130 : lors de chaque désorption suivant une adsorption i, réalisation d'un tirage aléatoire conditionné par la première loi de probabilité, de façon à établir un temps $t_{i,m}$, passé dans la phase mobile suite à la $i^{\text{ème}}$ adsorption.

Etape 140 : réitération ou sortie de l'algorithme. Lors de l'étape 140, l'indice i est incrémenté et les étapes 120 et 130 sont réitérées, jusqu'à ce que le cumul du temps passé dans la phase mobile atteigne le temps mort $t_0$. Cette condition de réitération correspond à

$$\sum_{l=0}^{i} t_{i,m} \geq t_0 \quad (3)$$

Lorsque cette condition est atteinte, l'étape 140 détermine le temps passé par la particule *x* dans la colonne, dit temps de rétention, et noté $t_R$, selon l'expression

$$\sum_{l=1}^{Ni} t_{l,s} + t_0 = t_R \quad (4)$$

où $N_i$ représente le nombre d'itérations réalisées, c'est-à-dire le nombre d'adsorptions dans la phase stationnaire.

On peut également définir un temps de rétention $t'_R$ dit ajusté, correspondant au temps cumulé passé par la particule *x* dans la phase stationnaire, soit $\sum_{l=1}^{Ni} t_{l,s} = t'_R \quad (4')$ (4')

On va à présent décrire un deuxième mode de réalisation, en lien avec la figure 3A, selon lequel la colonne est modulée en température. Plus précisément, durant le parcours de la molécule *x* à travers la colonne, la température T évolue selon une fonction temporelle prédéterminée. A chaque instant t, correspond une température de colonne T telle que T = *f*(t), *f* étant une fonction décrivant l'évolution temporelle de la température.

Par exemple, la colonne est portée successivement à $N_K$ paliers de température $T_k$, k étant un entier strictement positif représentant le rang de chaque palier de température. Une modulation en température correspond à une succession de paliers de température dans un ordre prédéterminé. La fonction d'évolution de température *f* peut alors être exprimée selon l'expression :

$$f(t) = T_k = T_i + \frac{T_f - T_i}{N_K} \sum_{k=1}^{N_K} H\left(t - \left\| k \times \frac{t_f}{N_K} \right\|\right) \quad (5)$$

où :

- $T_i$ est une température initiale de la modulation en température, cette température correspondant par exemple à l'entrée de la particule dans la colonne ;
- $t_f$ est la durée de la modulation en température de la colonne ;
- $T_f$ est la température finale de la colonne, lors du dernier palier ;
- *H* est la fonction de Heaviside, avec *H(t)* = 0 si t < 0 et *H(t)* = *1* si t ≥ 0.

Selon ce mode de réalisation, on fait l'hypothèse que le temps mort $t_0$ est indépendant de l'évolution de la température. Aussi, selon cette première approche, on considère que la première loi de probabilité ne dépend pas de la température, le coefficient d'adsorption $k_a$ étant considéré comme indépendant de la température. La deuxième loi de probabilité dépend de la température, du fait de l'évolution du ratio $\frac{k_a}{k_d}$ en fonction de la température, exprimé par l'équation de Van't Hoff :

$$\frac{k_a}{k_d} = \frac{1}{\beta} e^{-\frac{\Delta H}{RT} + \frac{\Delta S}{R}} \quad (6)$$

où :

- ΔH représente l'enthalpie d'activation, dont la valeur dépend du matériau composant la phase stationnaire et de la température ;
- ΔS représente l'entropie d'activation dont la valeur dépend du matériau composant la phase stationnaire et de la température ;
- R est la constante des gaz parfaits ;
- $\beta$ est le rapport des phases, c'est-à-dire le volume de la phase mobile sur le volume de la phase stationnaire.

Il vient : $k_d = \beta k_a e^{\frac{\Delta H}{RT} + \frac{\Delta S}{R}}$ (6').

Les différentes étapes de ce mode de réalisation sont les suivantes :

Etape 200 : initialisation : la température $T_k$ est initialisée à $T_{k=1}$.

Etape 210: détermination du temps de parcours dans la phase mobile avant une première adsorption. Cette étape comprend un tirage aléatoire conditionné par la première loi de probabilité, de façon à établir un temps $t_{0,m}$ passé dans la phase mobile, avant une première adsorption.

Le procédé suit alors un processus itératif, l'indice i désignant le rang de l'itération.

Etape 220 : lors de chaque adsorption i, détermination d'un temps $t_{i,s}$, passé par la particule dans la phase stationnaire au cours de ladite adsorption. Cette étape prend en compte le fait que durant une adsorption *i*, la température de la phase stationnaire est susceptible d'évoluer. Elle englobe différentes sous-étapes, effectuées de façon itérative, l'indice *j* désignant le rang de ces itérations, cet indice étant initialisé à 1. A chaque indice *j* est associé un palier de température $T_k$. L'indice *j* = 1 correspond au palier de température $T_k$ durant lequel a lieu l'adsorption *i*, les indices suivants correspondant aux paliers de température $T_{k+1}$, $T_{k+2}$... suivants.

Sous-Etape 221 : détermination de l'instant, noté $t_i^{j=1}$, auquel a lieu l'adsorption de rang *i*, et détermination

de la température $T_k$ correspondant à cet instant, par l'application de la fonction d'évolution de température $T_k = f\left(t_i^{j=1}\right).$

L'instant $t_i^{j=1}$ auquel a lieu d'adsorption *i est* obtenu par $t_i^{j=1} = \sum_{l=0}^{i-1} t_{l,m} + \sum_{l=1}^{i-1} t_{l,s}$ (7) (7) où :

- $\sum_{l=0}^{i-1} t_{l,m}$ correspond à la somme des temps $t_{l,m}$ passés dans la phase mobile jusqu'à l'adsorption *i* ; lors de la première adsorption (*i = 1*), ce terme est égal à $t_{0,m}$ ;

- $\sum_{l=1}^{i-1} t_{l,s}$ correspond à la somme des temps $t_{l,s}$ passés dans la phase stationnaire jusqu'à l'adsorption *i* ; lors de la première adsorption (*i = 1*), ce terme est nul.

<u>Sous-Etape 222</u> : estimation d'une durée d'adsorption dans la phase stationnaire, au cours de l'adsorption *i,* lors du palier de température $T_k$ associé à l'indice d'itération *j,* en effectuant un tirage aléatoire conditionné par la deuxième loi de probabilité, de façon à établir un temps $t_{i,s,k}$ passé dans la phase stationnaire, lors de l'adsorption *i,* au cours du palier de température $T_k$. Cette estimation est réalisée, par tirage aléatoire selon la deuxième loi de probabilité :

■ lorsque *j* =1, à l'instant $t_i^{j=1}$ auquel la *i*ème adsorption a lieu, ce dernier étant déterminé lors de la sous-étape 221 ;

■ lorsque *j* >1, à l'instant $t_i^{j}$ correspondant au début du palier de température $T_k$ associé à l'itération *j*.

<u>Sous-Etape 223</u> : A partir du tirage de $t_{i,s,k}$, estimation d'un instant de désorption $t_{i,d}^{j}$, associé à l'itération *j,* selon l'expression :

$$t_{i,d}^{j} = t_i^{j} + t_{i,s,k} \quad (8)$$

Cette estimation n'est validée que si, à l'instant de désorption $t_{i,d}^{j}$, la température de la colonne correspond à la température $T_k$ prise en compte pour estimer le temps $t_{i,s,k}$ passé dans la phase stationnaire. Autrement dit, cette estimation est validée si il n'y a pas de changement de température entre les instants $t_{i,d}^{j}$ et $t_i^{j}$. C'est l'objet des étapes 224 et 226

<u>Sous-Etape 224</u> : estimation de la température de la colonne, à l'instant de désorption $t_{i,d}^{j}$ déterminé lors de l'étape 223, par application de la fonction d'évolution de la température $f(t_{i,d}^{j})$

<u>Sous-Etape 225</u> : validation de l'estimation de l'instant de désorption $t_{i,d}^{j}$ estimé lors de l'étape 223, en comparant la température $f(t_{i,d}^{j})$ à l'instant de désorption estimé $t_{i,d}^{j}$ ainsi que la température $f(t_i^{j})$ à laquelle cet instant a été estimé :

- Si $f(t_{i,d}^{j}) \neq f(t_i^{j})$, c'est-à-dire si la température à l'instant de désorption $t_{i,d}^{j} = t_i^{j} + t_{i,s,k}$ est différente de la température $T_k$ à laquelle la durée d'adsorption $t_{i,s,k}$ a été estimée, l'estimation de l'instant de désorption $t_{i,d}^{j}$ associée à l'itération *j* n'est pas validée. En effet, cela signifie que la température de la colonne a évolué entre l'instant $t_i^{j}$, auquel l'estimation de la durée d'adsorption $t_{i,s,k}$ est effectuée, et l'instant de désorption $t_{i,d}^{j}$. Dans ce cas, une nouvelle itération *j* +1 est effectuée, en repartant de la sous-étape 222, en considérant que l'instant d'adsorption $t_i^{j+1}$ correspond au début du palier de température $T_{k+1}$ suivant le palier de température $T_k$ correspondant à

l'itération *j*. Autrement dit, $t_i^{j+1} = \sum_{q=1}^{q=k} \Delta t_q$ (9) (9) où $\Delta t_q$ représente la durée du palier de température de rang q, et k représente le rang de l'échelon de température correspondant à l'itération courante : $T_k = f(t_i^j)$ Les sous-

étapes 221 à 225 sont alors réitérées, en prenant en compte une température de colonne $T = T_{k+1} = f(t_i^{j+1})$. Ainsi, du fait du décalage temporel effectué en réactualisant le temps d'adsorption selon l'expression (9), lors de chaque nouvelle itération *j*, on considère que la particule vient d'être adsorbée dans une phase stationnaire, portée à une température $T_k = f(t_i^j)$ et dans laquelle la durée d'adsorption est conditionnée par la loi de probabilité $f_d(t, k_{dX,P=T}) = k_{dX,T} \times e^{-t \times k_{dX,T}}$. La colonne de chromatographie est alors considérée comme étant la succession de $N_K$ colonnes élémentaires indépendantes, chaque colonne élémentaire étant portée à une température $T_k$.

- Si $f(t_{i,d}^j) = f(t_i^j)$, c'est-à-dire si la température à l'instant de désorption estimé $t_{i,d}^j$ correspond à la température à laquelle la durée d'adsorption $t_{i,s,k}$ a été estimée, l'estimation de l'instant de désorption est validée. On passe alors à l'étape 230, en considérant que le temps passé dans la phase stationnaire S au cours de l'adsorption *i* est tel que $t_{i,s} = t_{i,d}^j + t_{i,s,k} - t_{i,d}^{j=1}$ (10) (10)

Etape 230 : lors de chaque désorption suivant une adsorption i, réalisation d'un tirage aléatoire conditionné par la première loi de probabilité, pour estimer un temps $t_{i,m}$, passé dans la phase mobile entre l'adsorption de rang *i* et l'adsorption de rang *i* +1.

Etape 240 : itération suivante ou sortie de l'algorithme. Les étapes 220 et 230 sont réitérées, en incrémentant l'indice i, jusqu'à ce que le cumul du temps passé dans la phase mobile atteigne le temps mort $t_0$, de même que dans le mode de réalisation précédent. Cette condition correspond à

$$\sum_{l=0}^{i} t_{l,m} \geq t_0$$

Lorsque cette condition est remplie, l'étape 240 détermine le temps passé par la particule dans la colonne, dit temps de rétention, et noté $t_R$, tel que

$$\sum_{l=1}^{i} t_{l,s} + t_0 = t_R$$

On peut également définir un temps de rétention $t'_R$ dit ajusté, correspondant au temps passé par la particule dans la phase stationnaire, soit : $\sum_{l=1}^{i} t_{l,s} = t'_R$.

Ce procédé est mis en oeuvre pour une pluralité de particules *x* de même espèce *X,* de façon à déterminer une distribution du temps de rétention $t_R$ ou du temps de rétention ajusté $t'_R$ pour ladite espèce X. On peut alors estimer des paramètres statistiques relatifs à cette distribution, tels qu'une moyenne, un paramètre représentatif d'une dispersion, par exemple la variance ou l'écart-type, ou d'autres paramètres. Le procédé permet alors une estimation d'un chromatogramme correspondant à ladite espèce *X* sans recours à une expression analytique.

Le recours à un procédé stochastique permet d'effectuer, lors de chaque adsorption, un tirage selon une loi de probabilité tenant compte de l'évolution de la température de la colonne. On comprend qu'un tel tirage est effectué de façon séquentielle, ce qui permet une prise en compte des conditions de température à l'instant où le tirage est réalisé. Le procédé est donc particulièrement adapté à une évolution de température de la phase stationnaire durant le parcours de la particule à travers la colonne.

De façon plus générale, le procédé est adapté à toute variation temporelle ou spatiale d'un paramètre de la colonne durant le parcours d'une particule. Cette variation entraîne une évolution modélisable de la première loi et/ou de la deuxième loi de probabilité précédemment décrites au cours de ce parcours. Il est alors possible de modéliser un temps de rétention par une estimation du temps passé par la particule dans la phase stationnaire lors de chaque adsorption. On comprend qu'outre une variation temporelle de la température de la colonne, le procédé est adapté à modéliser une variation temporelle de la composition C de la phase mobile M (c'est-à-dire du fluide porteur), ou encore une variation spatiale de la composition de la phase stationnaire S.

Selon un troisième mode de réalisation, la composition C de la phase mobile M évolue en fonction du temps, selon différents paliers. Dans ce cas, une fonction d'évolution temporelle $g$ décrit l'évolution de cette composition en fonction du temps. Ainsi, selon ce mode de réalisation, la composition de la phase mobile évolue selon des paliers $C_k$ tels que $C_k = g(t)$. Les principales étapes de ce mode de réalisation sont décrites ci-dessous, en lien avec la figure 3B.

L'étape 300 est une étape d'initialisation au cours de laquelle la composition de la phase mobile est initialisée de telle sorte que $C = C_{k=0}$. L'étape 310 correspond à l'étape 210 préalablement décrite. A l'issue de cette étape, le procédé suit un processus itératif, analogue à celui décrit en lien avec la figure 3A, l'indice i désignant le rang de l'itération. Selon ce mode de réalisation, la première loi peut varier en fonction de la composition de la phase mobile.

Etape 320 : lors de chaque adsorption $i$, détermination du temps $t_{i,s}$, passé par la particule dans la phase stationnaire. Cette étape prend en compte le fait que durant une adsorption $i$, la composition de la phase mobile est susceptible d'évoluer. Elle englobe différentes sous-étapes, effectuées de façon itératives, de façon similaire au précédent mode de réalisation. L'indice $j$ désigne le rang de l'itération, cet indice étant initialisé à 1. A chaque indice $j$ est associé une composition de la phase mobile $C_k$. L'indice $j = 1$ correspond à la composition de la phase mobile lors de l'adsorption $i$, les indices suivants correspondant aux paliers de composition suivants $C_{k+1}$, $C_{k+2}$...

Sous-Etape 321 : détermination de l'instant, noté $t_i^{j=1}$, auquel a lieu l'adsorption de rang $i$, et détermination de la composition de la phase mobile à cet instant, par l'application de la fonction d'évolution de la phase mobile $C_k = g(t_i^{j=1})$. Cet instant d'adsorption est obtenu de la même façon que durant la sous-étape 221 précédemment décrite.

Sous-Etape 322 : estimation d'une durée d'adsorption dans la phase stationnaire, au cours de l'adsorption i, lorsque la phase mobile a la composition $C_k$, en effectuant un tirage aléatoire conditionné par la deuxième loi de probabilité, de façon à établir un temps $t_{i,s,k}$ passé dans la phase stationnaire, lors de l'adsorption i alors que la phase mobile a pour composition $C_k$. Cette estimation est réalisée, par tirage aléatoire selon la deuxième loi de probabilité :

■ lorsque $j = 1$, à l'instant $t_i^{j=1}$ auquel la $i^{ème}$ adsorption a lieu, obtenu lors de la sous-étape 321 ;

■ lorsque $j > 1$, à l'instant $t_i^{j}$ correspondant au début de du palier $C_k$ associé à l'itération $j$.

Sous-Etape 323 : A partir du tirage de $t_{i,s,k}$, estimation d'un instant de désorption $t_{i,d}^{j}$, associé à l'itération j, selon l'expression :

$$t_{i,d}^{j} = t_i^{j} + t_{i,s,k} \quad (8)$$

Cette estimation n'est validée que si, à l'instant de désorption $t_{i,d}^{j}$, la composition de la phase mobile correspond à la composition $C_k$ prise en compte pour estimer le temps $t_{i,s,k}$ passé dans la phase stationnaire. Autrement dit, cette estimation est validée si il n'y a pas de changement de composition de la phase mobile entre $t_{i,d}^{j}$ et $t_i^{j}$. C'est l'objet des sous-étapes 324 et 326.

Sous-Etape 324 : estimation de la composition de la phase mobile de la colonne à l'instant de désorption $t_{i,d}^{j}$ déterminé lors de la sous-étape 323 par application de la fonction d'évolution de la composition de la phase mobile $g(t_{i,d}^{j})$.

Sous-Etape 325 : validation de l'estimation de l'instant de désorption $t_{i,d}^{j}$ estimé lors de l'étape 324, en comparant la composition de la phase mobile $g(t_{i,d}^{j})$ à l'instant de désorption estimé $t_{i,d}^{j}$ et la composition de la phase mobile $g(t_i^{j})$ en fonction de laquelle cet instant a été estimé :

- Si $g(t_{i,d}^j) \neq g(t_i^j)$, c'est-à-dire si la composition de la phase mobile à l'instant de désorption estimé $t_{i,d}^j$ est différente de la composition $C_k$ à laquelle la durée d'adsorption $t_{i,s,k}$ a été estimée, l'estimation de l'instant de désorption $t_{i,d}^j$ associée à l'itération j n'est pas validée. En effet, cela signifie que la composition de la phase mobile a évolué entre l'instant d'adsorption $t_i^j$, auquel l'estimation de la durée d'adsorption $t_{i,s,k}$ est effectuée, et l'instant de désorption $t_{i,d}^j$. Dans ce cas, une nouvelle itération $j+1$ est effectuée, en repartant de la sous-étape 322, en considérant que l'instant d'adsorption $t_i^{j+1}$ correspond au début de l'échelon de composition $C_{k+1}$ suivant l'échelon de composition $C_k$ correspondant à l'itération $j$. Autrement dit, $t_i^{j+1} = \sum_{q=1}^{q=k} \Delta t_q$ , où $\Delta t_q$ représente la durée de l'échelon de composition de rang q, et k représente le rang de l'échelon de composition correspondant à l'itération courante : $C_k = g(t_i^j)$ Les étapes 321 à 325 sont alors réitérées, en prenant en compte une composition de la phase mobile telle que $C_{k+1} = g(t_i^{j+1})$.

- Si $g(t_{i,d}^j) = g(t_i^j)$, c'est-à-dire si la composition de la phase mobile à l'instant de désorption estimé $t_{i,d}^j$ correspond à la composition de la phase mobile à laquelle la durée d'adsorption $t_{i,s,k}$ a été estimée, l'estimation de l'instant de désorption est validée. On passe alors à l'étape 330, en considérant que le temps passé dans la phase stationnaire S au cours de l'adsorption i est tel que $t_{i,s} = t_{i,d}^j + t_{i,s,k} - t_{i,d}^{j=1}$

Etape 330 : lors de chaque désorption suivant une adsorption i, réalisation d'un tirage conditionné par la première loi de probabilité, de façon à établir un temps $t_{i,m}$, passé dans la phase mobile entre l'adsorption de rang *i* et l'adsorption de rang *i* +1. La première loi de probabilité peut dépendre de la composition de la phase mobile, du fait de la dépendance du taux d'adsorption $k_a$.

Etape 340 : itération suivante ou sortie de l'algorithme. Les étapes 320 à 330 sont réitérées, en incrémentant l'indice *i,* jusqu'à ce que le cumul du temps passé dans la phase mobile atteigne le temps mort $t_0$, de même que dans le mode de réalisation précédent, de façon analogue à l'étape 240. Lorsque cette condition est remplie, l'étape 340 détermine le temps passé par la particule dans la colonne, ou le temps de rétention ajusté, en fonction du cumul des temps passés dans la phase stationnaire.

Selon un quatrième mode de réalisation, la composition Cs de la phase stationnaire S évolue spatialement en fonction d'une distance par rapport à l'entrée de la colonne. Ainsi, on peut déterminer une fonction h d'évolution de la phase stationnaire, telle que $C_S = h(D_i)$, $D_i$ représentant une distance à laquelle se produit une adsorption i par rapport à l'entrée de la colonne. Lors de chaque adsorption, on utilise une deuxième loi de probabilité correspondant à la composition Cs de la phase stationnaire correspondant à la distance $D_i$.

Essais

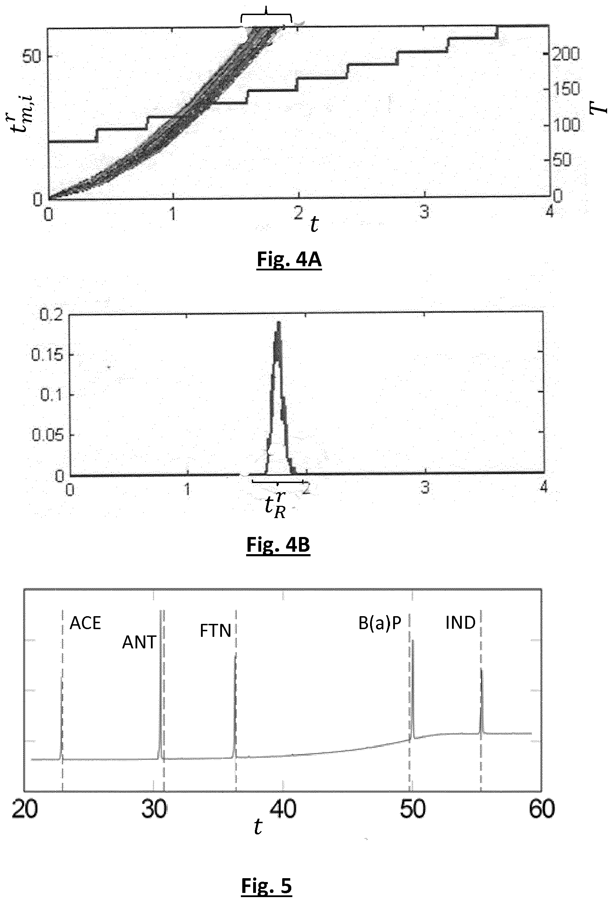

Des simulations ont été effectuées, en simulant le parcours de 500 molécules d'Anthracène, la modulation en température de la colonne étant réalisée selon dix paliers de température de même durée, entre une température initiale $T_i$ = 60 °C à t = 0 min et une température finale $T_f$ = 240 °C à t = 4 min. Les molécules sont introduites dans la colonne à *t* = 0 min. La figure 4A représente, sur le même graphique :

- la fonction d'évolution de température $T_k$ = f(t), k étant ici compris entre 1 et 10.

- le temps cumulé passé, pour chaque réalisation r, dans la phase mobile, jusqu'à une adsorption *i,* l'indice *i* évoluant en fonction du temps *t.* Ce temps cumulé passé dans la phase mobile est noté $t_{m,i}^r$, et est déterminé selon l'expression $t_{m,i}^r = \sum_{l=0}^i t_{m,l}^r + (11)$, $t_{m,l}^r$ désignant le temps dans la phase mobile suite à une adsorption *l*,

$t^r_{m,l=0}$ désignant le temps passé dans la phase mobile avant la première adsorption. L'accolade placée sur le graphe représente la plage selon laquelle s'étendent les temps de rétention $t^r_R$ de chaque réalisation, ces derniers correspondant au temps d'expérience t lorsque le temps désorbé cumulé est égal au temps mort qui, dans cette colonne, est de 60s.

Lors de cet essai, on a considéré une colonne de longueur 30 mètres, de diamètre 0.25 mm, et dont la phase stationnaire, d'épaisseur 0.25 $\mu$m, a la composition suivante : 5% phényle arylène, 95% diméthylepolysiloxane.

La figure 4B représente la distribution du temps de rétention dans la colonne établie à l'aide des 500 réalisations.

Il s'agit de l'histogramme des temps de rétention $t^r_R$ pour chaque réalisation r, avec $1 \leq r \leq 500$. Cette distribution constitue un modèle direct de la colonne, selon cette évolution de température, pour la molécule d'Anthracène. Plus le nombre de réalisations augmente, plus la précision statistique du modèle direct s'améliore.

Par ailleurs, des simulations ont été réalisées en mettant en oeuvre cinq composés de type hydrocarbures aromatiques polycycliques (HAP) : l'acenaphthène (ACE), le fluoranthène (FTN), le benzo(a)pyrène (B(a)P), l'anthracène (ANT) et l'indéno(1,2,3-cd)pyrène (IND). Pour chacune de ces molécules, on a considéré une colonne de longueur 30m, de diamètre 250 $\mu$m, la phase stationnaire étant constituée d'un mélange 5% phényle arylène, 95% diméthylepolysiloxane d'épaisseur 0,25 $\mu$m. Pour chaque espèce, on a établi une distribution des temps de rétention ajustés, à partir de laquelle on a estimé une moyenne du temps de rétention ajusté. Ces temps de rétention moyens sont reportés, sur la figure 5, pour chaque molécule, sous la forme de tirets verticaux.

Des essais expérimentaux ont été réalisés, en mettant en oeuvre une solution de méthanol comportant les cinq composés précédemment cités, la concentration de chacun d'entre eux étant de 100 $\mu$g/mL. La colonne de chromatographie a été couplée à un détecteur par ionisation de flamme, dit Flame Ionisation Detector.

Dans les simulations, comme dans les essais expérimentaux, la colonne a été soumise à un gradient de température de 5°C par minute, entre une température initiale de 50°C et une température finale de 250 °C. La durée de chaque palier est d'environ 5s. Le chromatogramme, corrigé du temps mort de la colonne, est représenté sur la figure 5. On remarque la bonne corrélation du temps de rétention ajusté de chaque espèce, entre les essais expérimentaux et les résultats des modélisations.

Le procédé décrit ci-dessus s'applique à la modélisation de colonnes de chromatographies aussi bien en phase liquide qu'en phase gazeuse. Il peut également être appliqué à la chromatographie multidimensionnelle, consistant à disposer en série différentes colonnes. Ce procédé peut être mis en oeuvre lors du dimensionnement d'une colonne de chromatographie ou lors de l'optimisation de paramètres de fonctionnement d'une colonne. Il peut également être utilisé pour établir un modèle direct de la colonne utilisé lors du dépouillement de mesures.

## Revendications

**1.** Procédé d'estimation d'un temps de rétention ($t_R$, $t_{R'}$) d'une particule (x) dans une colonne de chromatographie (1), ladite colonne de chromatographie comportant un canal (10) dont une paroi est formée d'un revêtement (12), dit phase stationnaire (S), apte à adsorber et désorber ladite particule, cette dernière étant portée par un fluide porteur, dit phase mobile (M), parcourant la dite colonne entre une entrée (in) et une sortie (out), définissant un temps mort ($t_0$), le temps mort correspondant au temps de parcours d'une particule n'interagissant pas avec la phase stationnaire, le procédé comportant les étapes suivantes :

a) estimation (110, 210) d'un temps passé dans la phase mobile ($t_{0,m}$), après l'entrée de la particule dans la colonne et jusqu'à une première adsorption dans la phase stationnaire, à l'aide d'une loi de probabilité du temps passé par la particule dans ladite phase mobile, dite première loi de probabilité ($f_m(t,k_{aX,P})$);
b) suite à chaque adsorption (i) de la particule dans la phase stationnaire, estimation (120, 220) d'un temps passé ($t_{i,s}$) par la particule dans ladite phase stationnaire jusqu'à une désorption, à l'aide d'une loi de probabilité du temps passé par la particule dans la phase stationnaire, dite deuxième loi de probabilité ($f_s(t,k_{dX,P})$);
c) suite à chaque désorption de la phase stationnaire, estimation d'un temps passé de la particule dans la phase mobile ($t_{i,m}$) jusqu'à une nouvelle adsorption dans la phase stationnaire, à l'aide de ladite première loi de probabilité ($f_m(t,k_{aX,P})$);
d) répétition des étapes b) et c) jusqu'à la ce que la somme des estimations du temps passé dans la phase mobile soit supérieure audit temps mort ($t_0$);
e) sommation des estimations des temps passés par la particule dans la phase stationnaire ($t_{i,s}$), afin d'estimer un temps de rétention ($t_R$) de ladite particule dans la colonne ;

le procédé étant tel que durant le parcours de la particule (x) entre l'entrée (in) et la sortie (out), un paramètre (T,C) régissant le fonctionnement de la colonne varie, de telle sorte que la première loi de probabilité $(f_m(t, k_{a\,X,P}))$ et/ou la deuxième loi de probabilité $(f_s(t, k_{d\,X,P}))$ évolue en fonction dudit paramètre ;

le procédé étant **caractérisé en ce que** durant le parcours de ladite particule, le paramètre (T, C) de la colonne est porté successivement à différents paliers, à chaque palier correspondant une valeur du paramètre ($T_k$, $C_k$), à chaque palier étant attribué un rang (k), l'étape b) comprenant alors les sous-étapes suivantes :

i) estimation (221, 321) de l'instant $\left(t_i^{j=1}\right)$ auquel a lieu ladite adsorption, et détermination dudit paramètre ($T_k$, $C_k$) de la colonne à cet instant ;

ii) estimation (222, 322) d'un temps passé ($t_{i,s,k}$) de la particule dans la phase stationnaire jusqu'à une désorption, à l'aide d'une loi de probabilité du temps passé dans la phase stationnaire, cette loi dépendant d'une valeur du paramètre ($T_k$, $C_k$) audit instant d'adsorption.

iii) estimation (223, 323) d'un instant de désorption $\left(t_{i,d}^{j}\right)$ de ladite particule, à partir de l'estimation établie lors de la sous-étape ii);

iv) détermination (224, 324) d'une valeur du paramètre correspondant audit instant de désorption ;

v)

■ lorsque ladite valeur du paramètre audit instant de désorption est différente de la valeur considérée lors de la sous-étape ii), réitération des sous-étapes ii) à iv) en considérant que l'instant d'adsorption $\left(t_i^{j+1}\right)$ correspond au début du palier de rang (k+1) suivant

■ lorsque la valeur du paramètre audit instant de désorption correspond à la valeur considérée lors de la sous-étape ii), détermination d'un temps passé ($t_{i,s}$) dans la phase stationnaire au cours de ladite adsorption.

2. Procédé selon la revendication 1, dans lequel le paramètre peut alors être choisi parmi :

- la température (T) de la colonne,
- la composition (C) de la phase mobile (M),

ledit paramètre évoluant en fonction du temps selon une pluralité de paliers ($T_k$, $C_k$).

3. Procédé selon la revendication 1, dans lequel, lors de la sous-étape v), ledit temps passé dans la phase stationnaire est obtenu en fonction :

- de la durée de chaque palier (k) entre l'instant d'adsorption, déterminé lors de l'étape i) et l'avant-dernière itération des sous-étapes ii) à v),
- et de l'estimation du temps passé ($t_{i,s,k}$) dans la phase stationnaire, déterminé lors de ladite dernière itération des sous- étapes ii) à v).

4. Procédé selon l'une quelconque des revendications précédentes, dans lequel lors de l'étape a) ou c), ladite première loi de probabilité suit une loi exponentielle, paramétrée par un taux d'adsorption ($k_a$), ce dernier représentant une probabilité par unité de temps que ladite particule, se trouvant dans la phase mobile, soit adsorbée dans la phase stationnaire.

5. Procédé selon l'une quelconque des revendications précédentes, dans lequel lors de l'étape b), ladite loi de probabilité du temps passé dans la phase stationnaire suit une loi exponentielle, paramétrée par un taux de désorption ($k_d$), ce dernier représentant une probabilité par unité de temps que ladite particule, se trouvant dans la phase stationnaire, soit désorbée de ladite la phase stationnaire.

6. Procédé selon l'une quelconque des revendications précédentes, dans lequel ledit temps mort ($t_0$) correspond au temps moyen passé par une particule, transportée par le fluide porteur, dans ladite colonne sans adsorption dans la phase stationnaire.

7. Procédé selon l'une quelconque des revendications précédentes, dans lequel les étapes a) à e) sont réalisées pour une pluralité de particules (x) de même espèce (X), de façon à obtenir une distribution d'un temps de rétention ($t_R$, $t_{R'}$) de ladite espèce dans la colonne.

8.  Procédé selon l'une quelconque des revendications précédentes, dans lequel les étapes a) à e) sont réalisées en considérant une pluralité de particules de différentes espèces de façon à obtenir une distribution d'un temps de rétention pour chacune de ces espèces.

9.  Procédé selon l'une quelconque des revendications 7 ou 8, comportant une étape f) de détermination d'un indicateur statistique d'au moins une distribution du temps de rétention d'une espèce, par exemple une moyenne.

10. Support d'enregistrement d'informations, comportant des instructions pour l'exécution de toutes les étapes d'un procédé selon l'une quelconque des revendications 1 à 9, ces instructions étant aptes à être exécutées par un processeur (30).

**Patentansprüche**

1.  Verfahren zur Schätzung einer Retentionszeit ($t_R$, $t_{R'}$) eines Partikels (x) in einer Chromatographiesäule (1), wobei die Chromatographiesäule einen Kanal (10) aufweist, von dem eine Wand von einer Auskleidung (12), stationäre Phase (S) genannt, gebildet wird, die in der Lage ist, das Partikel zu adsorbieren und zu desorbieren, wobei das Letztere von einem Trägerfluid, bewegliche Phase (M) genannt, getragen wird, das die Säule zwischen einem Eingang (in) und einem Ausgang (out) durchströmt, wobei es eine Totzeit ($t_0$) definiert, wobei die Totzeit der Wegzeit eines Partikels entspricht, das nicht mit der stationären Phase interagiert, wobei das Verfahren die folgenden Schritte umfasst:

    a) Schätzung (110, 210) einer in der beweglichen Phase verbrachten Zeit ($t_{0,m}$) nach dem Eintritt des Partikels in die Säule und bis zu einer ersten Adsorption in die stationäre Phase mithilfe einer Wahrscheinlichkeitsverteilung der von dem Partikel in der beweglichen Phase verbrachten Zeit, erste Wahrscheinlichkeitsverteilung ($f_m(t,\ k_{a\ X,P})$) genannt;
    b) im Anschluss an jede Adsorption (i) des Partikels in die stationäre Phase, Schätzung (120, 220) einer von dem Partikel in der stationären Phase bis zu einer Desorption verbrachten Zeit ($t_{i,s}$) mithilfe einer Wahrscheinlichkeitsverteilung der von dem Partikel in der stationären Phase verbrachten Zeit, zweite Wahrscheinlichkeitsverteilung ($f_s(t,\ k_{d\ X,P})$) genannt;
    c) im Anschluss an jede Desorption aus der stationären Phase, Schätzung einer von dem Partikel in der beweglichen Phase verbrachten Zeit ($t_{i,m}$) bis zu einer erneuten Adsorption in die stationäre Phase mithilfe der ersten Wahrscheinlichkeitsverteilung ($f_m(t,\ k_{X,P})$);
    d) Wiederholung der Schritte b) und c), so lange, bis die Summe der Schätzungen der in der beweglichen Phase verbrachten Zeit größer als die Totzeit ($t_0$) ist;
    e) Summierung der Schätzungen der von dem Partikel in der stationären Phase verbrachten Zeiten ($t_{i,s}$), um eine Retentionszeit ($t_R$) des Partikels in der Säule zu schätzen;

    wobei das Verfahren so beschaffen ist, dass während des Durchgangs des Partikels (x) zwischen dem Eingang (in) und dem Ausgang (out) ein Parameter (T,C), der die Funktionsweise der Säule regelt, variiert, derart, dass sich die erste Wahrscheinlichkeitsverteilung ($f_m(t,\ k_{a\ X,P})$) und/oder die zweite Wahrscheinlichkeitsverteilung ($f_s(t,\ k_{d\ X,P})$) in Abhängigkeit von diesem Parameter ändert;
    wobei das Verfahren **dadurch gekennzeichnet ist, dass** während des Durchgangs des Partikels der Parameter (T, C) der Säule nacheinander auf verschiedene Stufen gesetzt wird, wobei jeder Stufe ein Wert des Parameters ($T_k$, $C_k$) entspricht, wobei jeder Stufe ein Rang (k) zugewiesen wird, wobei Schritt b) dann die folgenden Teilschritte umfasst:

    i) Schätzung (221, 321) des Zeitpunkts $\left(t_i^{j=1}\right),$ zu dem die Adsorption stattfindet, und Bestimmung des Parameters ($T_k$, $C_k$) der Säule zu diesem Zeitpunkt;
    ii) Schätzung (222, 322) einer von dem Partikel bis zu einer Desorption in der stationären Phase verbrachten Zeit ($t_{i,s,k}$) mithilfe einer Wahrscheinlichkeitsverteilung der in der stationären Phase verbrachten Zeit, wobei diese Verteilung von einem Wert des Parameters ($T_k$, $C_k$) zum Adsorptionszeitpunkt abhängt;
    iii) Schätzung (223, 323) eines Zeitpunkts $\left(t_{i,d}^{j}\right)$ der Desorption des Partikels ausgehend von der im Teilschritt ii) gewonnenen Schätzung;
    iv) Bestimmung (224, 324) eines Wertes des Parameters, welcher dem Desorptionszeitpunkt entspricht;
    v)

**13**

■ wenn der Wert des Parameters zum Desorptionszeitpunkt von dem im Teilschritt ii) betrachteten Wert verschieden ist, Iteration der Teilschritte ii) bis iv) unter der Annahme, dass der Adsorptionszeitpunkt $\left(t_i^{j+1}\right)$ dem Beginn der Stufe des folgenden Ranges (k+1) entspricht,

■ wenn der Wert des Parameters zum Desorptionszeitpunkt dem im Teilschritt ii) betrachteten Wert entspricht, Bestimmung einer während der Adsorption in der stationären Phase verbrachten Zeit ($t_{i,s}$).

2. Verfahren nach Anspruch 1, wobei der Parameter dann ausgewählt werden kann aus:

- der Temperatur (T) der Säule,
- der Zusammensetzung (C) der beweglichen Phase (M),

wobei sich der Parameter in Abhängigkeit von der Zeit in mehreren Stufen ($T_k$, $C_k$) ändert.

3. Verfahren nach Anspruch 1, wobei im Teilschritt v) die in der stationären Phase verbrachte Zeit erhalten wird in Abhängigkeit:

- von der Dauer jeder Stufe (k) zwischen dem Adsorptionszeitpunkt, der im Schritt i) bestimmt wurde, und der vorletzten Iteration der Teilschritte ii) bis v),
- und von der Schätzung der in der stationären Phase verbrachten Zeit ($t_{i,s,k}$), die in der letzten Iteration der Teilschritte ii) bis v) bestimmt wurde.

4. Verfahren nach einem der vorhergehenden Ansprüche, wobei im Schritt a) oder c) die erste Wahrscheinlichkeitsverteilung eine Exponentialverteilung ist, die mit einer Adsorptionsrate ($k_a$) parametriert ist, wobei diese Letztere eine Wahrscheinlichkeit pro Zeiteinheit darstellt, dass das Partikel, wenn es sich in der beweglichen Phase befindet, in die stationäre Phase adsorbiert wird.

5. Verfahren nach einem der vorhergehenden Ansprüche, wobei im Schritt b) die Wahrscheinlichkeitsverteilung der in der stationären Phase verbrachten Zeit eine Exponentialverteilung ist, die mit einer Desorptionsrate ($k_d$) parametriert ist, wobei diese Letztere eine Wahrscheinlichkeit pro Zeiteinheit darstellt, dass das Partikel, wenn es sich in der stationären Phase befindet, aus dieser stationären Phase desorbiert wird.

6. Verfahren nach einem der vorhergehenden Ansprüche, wobei die Totzeit ($t_0$) der mittleren Zeit entspricht, die von einem Partikel, das von dem Trägerfluid transportiert wird, ohne Adsorption in der stationären Phase verbracht wird.

7. Verfahren nach einem der vorhergehenden Ansprüche, wobei die Schritte a) bis e) für eine Vielzahl von Partikeln (*x*) derselben Art (*X*) durchgeführt werden, derart, dass eine Verteilung einer Retentionszeit ($t_R$, $t_{R'}$) dieser Art in der Säule erhalten wird.

8. Verfahren nach einem der vorhergehenden Ansprüche, wobei die Schritte a) bis e) unter Berücksichtigung einer Vielzahl von Partikeln unterschiedlicher Arten durchgeführt werden, derart, dass eine Verteilung einer Retentionszeit für jede dieser Arten erhalten wird.

9. Verfahren nach einem der Ansprüche 7 oder 8, welches einen Schritt f) der Bestimmung eines statistischen Indikators wenigstens einer Verteilung der Retentionszeit einer Art, zum Beispiel eines Mittelwertes, umfasst.

10. Informationsaufzeichnungsmedium, welches Anweisungen zur Ausführung aller Schritte eines Verfahrens nach einem der Ansprüche 1 bis 9 umfasst, wobei diese Anweisungen geeignet sind, von einem Prozessor (30) ausgeführt zu werden.

## Claims

1. Method for estimating a retention time ($t_R$, $t_{R'}$) of a particle (x) in a chromatography column (1), said chromatography column including a channel (10) one wall of which is formed from a coating (12), called the stationary phase (S), able to adsorb and desorb said particle, the latter being carried by a carrier fluid, called the mobile phase (M), transiting said column between an entrance (in) and an exit (out), defining a dead time (to), the dead time corresponding to the transit time of a particle that does not interact with the stationary phase, the method including the following steps

a) estimating (110, 210) a time ($t_{0,m}$) passed in the mobile phase after the entrance of the particle into the column and until a first adsorption in the stationary phase using a probabilistic relationship dependent on the time passed by the particle in said mobile phase, which relationship is called the first probabilistic relationship ($f_m(t,k_{a\,X,P})$);

b) following each adsorption (i) of the particle in the stationary phase, estimating (120, 220) a time ($t_{i,s}$) passed by the particle in the stationary phase until a desorption using a probabilistic relationship dependent on the time passed by the particle in the stationary phase, which relationship is called the second probabilistic relationship ($f_s(t,k_{d\,X,P})$);

c) following each desorption from the stationary phase, estimating a time ($t_{i,m}$) passed by the particle in the mobile phase until a new adsorption in the stationary phase, using said first probabilistic relationship ($f_m(t,k_{a\,X,P})$);

d) repeating steps b) and c) until the sum of the estimations of the time passed in the mobile phase is higher than the dead time (to);

e) summing the estimations of the times ($t_{i,s}$) passed by the particle in the stationary phase, in order to estimate a retention time ($t_R$) of said particle in the column;

the method being such that during the transit of the particle (x) between the entrance (in) and exit (out) a parameter (T,C) governing the operation of the column varies, the first probalistic relationship ($f_m(t,k_{a\,X,P})$) and/or the second probalistic relationship ($f_s(t,k_{d\,X,P})$) varying as a function of said parameter;

the method being **characterized in that** during the transit of said particle, the parameter (T,C) of the column is successively brought to various plateaus, each plateau corresponding to a value of the parameter ($T_k$, $C_k$), each plateau being attributed a rank (k), step b) then comprising the following substeps:

i) estimating (221, 321) the absorption time $\left(t_i^{j=1}\right)$ at which said adsorption takes place and determining said parameter ($T_k$, $C_k$) of the column at said time;

ii) estimating (222, 322) a time ($t_{i,s,k}$) passed by the particle in the stationary phase until a desorption using a probabilistic relationship dependent on time passed in the stationary phase, this relationship depending on a value of the parameter ($T_k$, $C_k$) at said adsorption time;

iii) estimating (223, 323) a desorption time $\left(t_{i,d}^{j}\right)$ of said particle from the estimation established in substep ii);

iv) determining (224, 324) a value of the parameter corresponding to said desorption time;

v)

• when said value of the parameter at said desorption time is different from the value used in substep ii), reiterating substeps ii) to iv) using the adsorption time $\left(t_i^{j+1}\right)$ corresponding to the start of the plateau of following rank (k+1);

• when the value of the parameter at said desorption time corresponds to the value used in substep ii), determining a time ($t_{i,s}$) passed in the stationary phase during said adsorption.

2. Method according to Claim 1, wherein the parameter may then be chosen from:

- the temperature (T) of the column;
- the composition (C) of the mobile phase (M);

said parameter being varied as a function of time between a plurality of plateaus ($T_k$, Ck).

3. Method according to Claim 1, wherein, in substep v), said time passed in the stationary phase is obtained depending on:

- the length of each plateau (k) between the adsorption time determined in substep i) and the before-the last iteration of substeps ii) to v);
- and the estimation of the time ($t_{i,s,k}$) passed in the stationary phase, which time is estimated in said last iteration of substeps ii) to v).

4. Method according to any one of the preceding claims, wherein, in step a) or c), said first probabilistic relationship follows an exponential distribution parameterized by an adsorption rate ($k_a$), the latter representing a probability per unit time that said particle in the mobile phase will be adsorbed in the stationary phase.

5. Method according to any one of the preceding claims, wherein, in step b), said probabilistic relationship dependent on time passed in the stationary phase follows an exponential distribution parameterized by a desorption rate ($k_d$), the latter representing a probability per unit time that said particle in the stationary phase will be desorbed by said stationary phase.

6. Method according to any one of the preceding claims, wherein said dead time (to) corresponds to the average time passed by a particle, transported by the carrier fluid, in said column without adsorption in the stationary phase.

7. Method according to any one of the preceding claims, wherein steps a) to e) are carried out for a plurality of particles *(x)* of a given species (*X*), so as to obtain a distribution of a retention time ($t_R$, $t_{R'}$) of said species in the column.

8. Method according to any one of the preceding claims, wherein steps a) to e) are carried out for a plurality of particles of various species so as to obtain a retention time distribution for each of these species.

9. Method according to either of claims 7 and 8, including a step f) of determining a statistical indicator, an average for example, of at least one distribution of the retention time of a species.

10. Data storage medium including instructions for executing all the steps of a method according to any one of Claims 1 to 9, these instructions being able to be executed by a processor (30).

**Fig. 1**

**Fig. 2**

**Fig. 3A**

**Fig. 3B**

**Fig. 4A**

**Fig. 4B**

**Fig. 5**

**EP 3 133 392 B1**